# EUROPEAN PATENT APPLICATION

(11) **EP 3 855 693 A1**
(43) Date of publication of application: **28.07.2021**
(21) Application number: 19861825.8
(22) Date of filing: 22.04.2019
(51) Int. Cl.: H04L 29/06

(54) **AUTHENTICATION METHOD, APPARATUS, AND SYSTEM**

(30) Priority: 21.09.2018 CN 201811117613
(71) Applicant: ZTE Corporation, Shenzhen, Guangdong 518057 (CN)
(72) Inventor: DONG, Luming, Shenzhen, Guangdong 518057 (CN)
(74) Representative: Regimbeau
(86) International application number: PCT/CN2019/083719
(87) International publication number: WO 2020/057119

(57) **Abstract**

Provided are an authentication method and apparatus. The authentication method includes: acquiring feature information of an infrastructure environment where a virtualization network function (VNF) instance is running; and determining, according to the feature information of the infrastructure environment where the VNF instance is running and a configured license file, whether the VNF instance is currently running in a legitimately authorized environment.

## Description

This application claims priority to Chinese Patent Application No. 201811117613.8 filed with the CNIPA on Sep. 21, 2018, the disclosure of which is incorporated herein by reference in its entirety.

### TECHNICAL FIELD

The present disclosure relates to, but is not limited to, the field of virtualization technologies and, for example, to an authentication method, apparatus and system.

### BACKGROUND

A non-virtualized telecommunications network element, also referred to as a physical network function (PNF), generally implements the authentication and control of licenses for software functions deployed on a physical device based on features of the physical device, which generally includes the followings: identifying device assets, creating a license file for the device assets according to a sales contract, installing the license file on the device, and restricting software functions on the device according to authorized content in the license file.

Because of the uniqueness and non-replicability of the features of the physical device, if software of the PNF is replicated to an unauthorized device to run, the piracy and abuse can be discovered and prevented by checking whether a physical environment where the software is actually running is consistent with the features of the physical device that are authorized in the license file through a license authentication mechanism, thereby protecting the legitimate interests of a equipment provider.

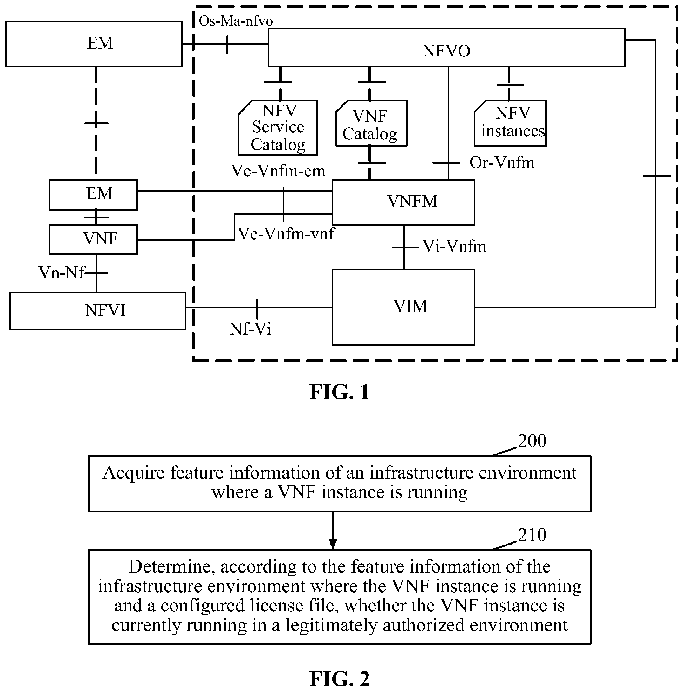

However, a virtualization network function (VNF) complies with technical specifications for network function virtualization (NFV), which are proposed by the European Telecommunications Standards Institute (ETSI). The architecture is shown in FIG. 1.

In FIG. 1, a virtualization infrastructure manager (VIM) is configured to allocate, manage and release virtualization resources, and collect and report the performance and error information of the virtualization resources.

A virtualization network function manager (VNFM) is configured to coordinate related network function virtualization infrastructure (NFVI) resources involved in functions such as VNF instantiation, termination, resilient scaling and version upgrades.

The NFVI is configured to describe physical computing, storage and network switch devices deployed in a data center and governed based on a virtualization hypervisor.

A network function virtualization orchestrator (NFVO) is configured to manage the life cycle of a network service (NS), coordinate the management of the life cycle of the NS, coordinate the management of the life cycle of the VNF, and coordinate the management of multiple types of resources of the NFVI, thereby ensuring the optimized configuration of required multiple types of resources and connections. The NS is a set of multiple VNFs interconnected to each other and constitutes a complete telecommunications network function (for example, the VNF of a virtual base station is connected to the VNF of a virtual core network to constitute a radio access NS).

An NFV management and orchestration (MANO) is a general term for three entities, the VIM, the VNFM and the NFVO.

The VNF is a virtual network element and implements a network function by software.

In the preceding architecture, the virtualization network function and hardware are decoupled, that is, the equipment provider only needs to provide a software package of the VNF, and then operation and maintenance personnel of an operator can initiate an orchestration initiation command through an NFVO client and finally allocate computing, storage and network resources and initiate a VNF instance on selected infrastructure (NFVI) through the resource allocation and coordination of the NFVO, the VNFM and the VIM in sequence. The VNF instance implements service functions of a telecommunications network by software within the life cycle of the VNF instance. Since an environment on which VNF software runs is a virtual machine and the hardware devices of the virtual machine, such as a virtual central processing unit (CPU), a virtual network card and a virtual memory, are generated through simulation by software and are not persistent or associated with a physical device, the implementation of the license authentication mechanism based on the running environment of the VNF is not feasible, and the unauthorized replication and deployment of the same VNF software package in different infrastructure environments cannot be prevented.

### SUMMARY

The present disclosure provides an authentication method, apparatus and system, which can provide effective license authentication for a VNF and thus protect interests of a telecommunications equipment provider.

The present disclosure provides an authentication method including steps described below.

Feature information of an infrastructure environment where a VNF instance is running is acquired.

Whether the VNF instance is currently running in a legitimately authorized environment is determined according to the feature information of the infrastructure environment where the VNF instance is running and a configured license file.

The present disclosure provides an authentication method including steps described below.

A query request is received, where the query request carries a VNF instance identifier.

Feature information of an infrastructure environment where a VNF instance is running is acquired according to the VNF instance identifier.

A query acknowledgement is sent, where the query acknowledgement includes the feature information of the infrastructure environment where the VNF instance is running.

The present disclosure provides an authentication apparatus including an acquisition module and an authentication module.

The acquisition module is configured to acquire feature information of an infrastructure environment where a VNF instance is running.

The authentication module is configured to determine, according to the feature information of the infrastructure environment where the VNF instance is running and a configured license file, whether the VNF instance is currently running in a legitimately authorized environment.

The present disclosure provides an authentication apparatus including a reception module, an acquisition module and a sending module.

The reception module is configured to receive a query request, where the query request carries a VNF instance identifier.

The acquisition module is configured to acquire, according to the VNF instance identifier, feature information of the infrastructure environment where a VNF instance is running.

The sending module is configured to send a query acknowledgement, where the query acknowledgement includes the feature information of the infrastructure environment where the VNF instance is running.

The present disclosure provides an authentication device including a processor and a computer-readable storage medium. The computer-readable storage medium stores instructions, and the instructions are configured to, when executed by the processor, implement any one of the preceding authentication methods.

The present disclosure provides a computer-readable storage medium, which is configured to store a computer program. The computer program is configured to, when executed by a processor, implement any one of the preceding authentication methods.

The present disclosure provides an authentication system including a first device and a second device.

The first device is configured to: send a query request, where the query request carries a VNF instance identifier; receive a query acknowledgement, where the query acknowledgement includes feature information of an infrastructure environment where a VNF instance is running; and determine, according to the feature information of the infrastructure environment where the VNF instance is running and a configured license file, whether the VNF instance is currently running in a legitimately authorized environment.

The second device is configured to: receive the query request; acquire, according to the VNF instance identifier, the feature information of the infrastructure environment where the VNF instance is running; and send the query acknowledgement.

The present disclosure provides an authentication system including a first device, a second device and a third device.

The first device is configured to: send a query request, where the query request carries a VNF instance identifier; receive a query acknowledgement, where the query acknowledgement includes feature information of an infrastructure environment where a VNF instance is running; and determine, according to the feature information of the infrastructure environment where the VNF instance is running and a configured license file, whether the VNF instance is currently running in a legitimately authorized environment.

The second device is configured to forward the query request and forward the query acknowledgement.

The third device is configured to: receive the query request; acquire, according to the VNF instance identifier, the feature information of the infrastructure environment where the VNF instance is running; and send the query acknowledgement.

### BRIEF DESCRIPTION OF DRAWINGS

FIG. 1 is a schematic diagram of architecture of a VNF in the related art.
FIG. 2 is a flowchart of an authentication method according to an embodiment.
FIG. 3 is a flowchart of another authentication method according to an embodiment.
FIG. 4 is a diagram illustrating interactions in an authentication method according to an embodiment.
FIG. 5 is a diagram illustrating interactions in another authentication method according to an embodiment.
FIG. 6 is a structural diagram of an authentication apparatus according to an embodiment.
FIG. 7 is a structural diagram of another authentication apparatus according to an embodiment.
FIG. 8 is a structural diagram of an authentication system according to an embodiment.
FIG. 9 is a structural diagram of another authentication system according to an embodiment.

### DETAILED DESCRIPTION

The present disclosure will be described hereinafter in conjunction with drawings.

The steps illustrated in the flowcharts among the drawings may be performed by, for example, a computer system including a set of computer-executable instructions.

FIG. 2 is a flowchart of an authentication method according to an embodiment. Referring to FIG. 2, the method provided by this embodiment includes steps described below.

In step 200, feature information of an infrastructure environment where a VNF instance is running is acquired.

In this embodiment, the feature information of the infrastructure environment where the VNF instance is running includes a unique physical identifier or logical identifier of the infrastructure resource associated with the VNF instance among unique physical identifiers or logical identifiers of infrastructure resources managed by a MANO, where the unique physical identifier or logical identifier is feature information used for distinguishing the infrastructure environment where the VNF instance is deployed.

In an embodiment, the unique physical identifier or logical identifier of the infrastructure resource associated with the VNF instance among the unique physical identifiers or logical identifiers of the infrastructure resources managed by the MANO includes, but is not limited to, a service domain name, a hostname or a VIM identifier (ID) provided by a VIM to a VNFM or an NFVO, where the VIM ID is customized by an infrastructure service provider; an asset identifier or asset identifier combination of a physical device in an NFVI resource pool managed by the VIM, such as a CPU identifier, a hardware feature code or a device barcode of a server; a combination of geographic location information of the NFVI resource pool managed by the VIM and network service endpoint information, such as an NfviPopGeneral information element defined in NFV-IFA005 V0.8.10 for Or-Vi interface specifications.

In step 210, whether the VNF instance is currently running in a legitimately authorized environment is determined according to the feature information of the infrastructure environment where the VNF instance is running and a configured license file.

In this embodiment, in a case where the feature information of the infrastructure environment where the VNF instance is running is consistent with feature information of an infrastructure environment bound to the license file, it is determined that the VNF instance is currently running in the legitimately authorized environment. In a case where the feature information of the infrastructure environment where the VNF instance is running is inconsistent with the feature information of the infrastructure environment bound to the configured license file, it is determined that the VNF instance is currently running in an environment that is not legitimately authorized.

In another embodiment, in a case where it is determined that the VNF instance is currently running in the legitimately authorized environment, the method further includes: providing corresponding service functions according to each authorized item in the license file. In a case where it is determined that the VNF instance is currently running in the environment that is not legitimately authorized, the method further includes: initiating protection measures such as restricting software capabilities.

In this embodiment, whether the VNF instance is currently running in the legitimately authorized environment is determined in conjunction with the feature information of the infrastructure environment where the VNF instance is running and the license file. The feature information of the infrastructure environment where the VNF instance is running reflects features of a physical device and truly represents characteristics of the infrastructure environment where the VNF instance is running, thereby providing effective license authentication for a VNF and protecting legitimate interests of a telecommunications equipment provider.

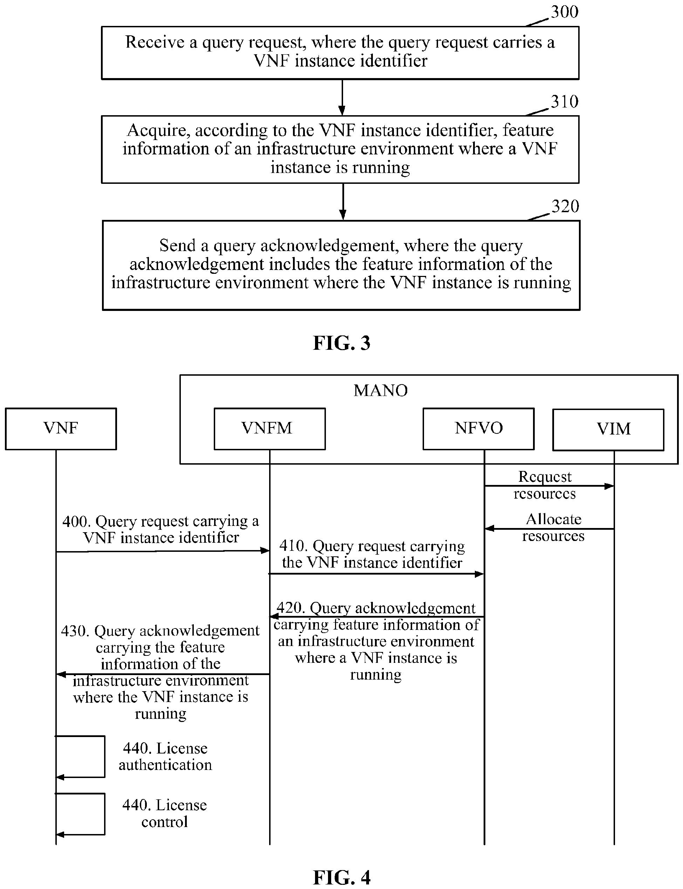

FIG. 3 is a flowchart of another authentication method according to an embodiment. Referring to FIG. 3, the method provided by this embodiment includes steps described below.

In step 300, a query request is received, where the query request carries a VNF instance identifier.

In step 310, feature information of an infrastructure environment where a VNF instance is running is acquired according to the VNF instance identifier.

In this embodiment, the step in which the feature information of the infrastructure environment where the VNF instance is running is acquired according to the VNF instance identifier includes: searching a preset correspondence between VNF instance identifiers and information about infrastructure resources allocated to VNFs in an instantiation process for information about the infrastructure resource allocated to a VNF in the instantiation process, where the information about the infrastructure resource corresponds to the VNF instance identifier in the query request, and using the information about the infrastructure resource as the feature information of the infrastructure environment where the VNF instance is running.

In step 320, a query acknowledgement is sent, where the query acknowledgement includes the feature information of the infrastructure environment where the VNF instance is running.

Implementations of the present disclosure are described below through specific examples, and examples given are not intended to limit the scope of the present disclosure.

### Example one

In this example, a VNF instance acquires feature information of an infrastructure environment where the VNF instance is running from NFVO and then performs license authentication.

In this example, as shown in FIG. 4, a VNF life cycle management is based on an indirection mode, that is, a VNFM indirectly interacts with VIM via the NFVO for applying resources required for instantiating a VNF instead of directly interacting with the VIM in a process of instantiating the VNF

Referring to FIG. 4, the authentication method includes steps described below.

In step 400, the VNF is instantiated successfully, and the VNF sends a query request to the VNFM through Ve-Vnfm-Vnf interface, where the query request carries a VNF instance identifier.

In step 410, the VNFM sends the query request to the NFVO through Or-Vnfm interface, where the query request carries the VNF instance identifier.

In step 420, the NFVO searches a preset correspondence between VNF instance identifiers and information about infrastructure resources allocated to VNFs in an instantiation process for information about the infrastructure resource allocated to the VNF in the instantiation process, where the information about the infrastructure resource corresponds to the VNF instance identifier in the query request, uses the information about the infrastructure resource as the feature information of the infrastructure environment where the VNF instance is running, and sends a query acknowledgement to the VNFM through Or-Vnfm interface, where the query acknowledgement carries the feature information of the infrastructure environment where the VNF instance is running.

In this step, the feature information of the infrastructure environment where the VNF instance is running is a unique physical identifier or logical identifier of the infrastructure resource associated with the VNF instance among unique physical identifiers or logical identifiers of infrastructure resources managed by the VIM, where the unique physical identifier or logical identifier is feature information used for distinguishing the infrastructure environment where the VNF instance is deployed.

In an embodiment, the unique physical identifier or logical identifier of the infrastructure resource associated with the VNF instance among the unique physical identifiers or logical identifiers of the infrastructure resources managed by the VIM includes, but is not limited to, the following information: (a) a service domain name, a hostname or a VIM ID provided by the VIM to the VNFM or the NFVO, where the VIM ID is customized by an infrastructure service provider; (b) an asset identifier combination of a physical device in an NFVI resource pool managed by the VIM, such as a CPU identifier, a hardware feature code or a device barcode of a server; (c) a combination of geographic location information of the NFVI resource pool managed by the VIM and network service endpoint information, such as an NfviPopGeneral information element defined in NFV-IFA005 V0.8.10 for Or-Vi interface specifications.

In step 430, the VNFM sends the query acknowledgement to the VNF through Ve-Vnfm-Vnf interface, where the query acknowledgement carries the feature information of the infrastructure environment where the VNF instance is running.

In step 440, the VNF acquires the feature information of the infrastructure environment where the VNF instance is running from the query acknowledgement and compares the feature information of the infrastructure environment where the VNF instance is running with feature information of an infrastructure environment bound to a locally stored license file; in the case where the feature information of the infrastructure environment where the VNF instance is running is consistent with the feature information of the infrastructure environment bound to the license file, it indicates that the VNF instance is currently running in a legitimately authorized environment, and the VNF then provides corresponding service functions according to each authorized item in the license file; in the case where the feature information of the infrastructure environment where the VNF instance is running is inconsistent with the feature information of the infrastructure environment bound to the configured license file, the VNF determines that the VNF instance is currently running in an environment that is not legitimately authorized (that is, the deployment of the VNF instance is unauthorized) and initiates protection measures such as restricting software capabilities.

### Example two

In this example, a VNF instance acquires feature information of an infrastructure environment where the VNF instance is running from a VNFM and performs license authentication.

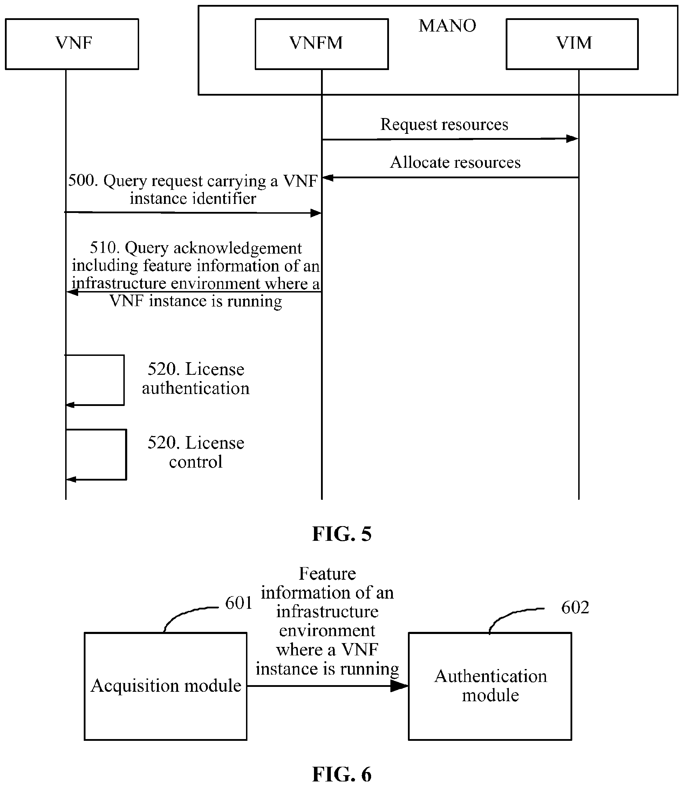

In this example, as shown in FIG. 5, the VNF manager is based on a direction mode, that is, the VNFM directly interact with VIM for applying resources required for instantiating a VNF and NFVO is not involved in a process of instantiating the VNF

Referring to FIG. 5, the authentication method includes steps described below.

In step 500, the VNF is instantiated successfully, and the VNF sends a query request to the VNFM through Ve-Vnfm-Vnf interface, where the query request carries a VNF instance identifier.

In step 510, the VNFM searches a preset correspondence between VNF instance identifiers and information about infrastructure resources allocated to VNFs in an instantiation process for information about the infrastructure resource allocated to the VNF in the instantiation process, where the information about the infrastructure resource corresponds to the VNF instance identifier in the query request, uses the information about the infrastructure resource as the feature information of the infrastructure environment where the VNF instance is running, and sends a query acknowledgement to the VNF through Ve-Vnfm-Vnf interface, where the query acknowledgement carries the feature information of the infrastructure environment where the VNF instance is running.

In this step, the feature information of the infrastructure environment where the VNF instance is running is a unique physical identifier or logical identifier of the infrastructure resource associated with the VNF instance among unique physical or logical identifiers of infrastructure resources managed by the VIM, where the unique physical identifier or logical identifier is feature information used for distinguishing the infrastructure environment where the VNF instance is deployed.

In an embodiment, the unique physical identifier or logical identifier of the infrastructure resource associated with the VNF instance among the unique physical identifiers or logical identifiers of the infrastructure resources managed by the VIM includes, but is not limited to, the following information: (a) a service domain name, a hostname or a VIM ID provided by the VIM to the VNFM or the NFVO, where the VIM ID is customized by an infrastructure service provider; (b) an asset identifier combination of a physical device in an NFVI resource pool managed by the VIM, such as a CPU identifier, a hardware feature code or a device barcode of a server; (c) a combination of geographic location information of the NFVI resource pool managed by the VIM and network service endpoint information, such as an NfviPopGeneral information element defined in NFV-IFA005 V0.8.10 for Or-Vi interface specifications.

In step 520, the VNF acquires the feature information of the infrastructure environment where the VNF instance is running from the query acknowledgement and compares the feature information of the infrastructure environment where the VNF instance is running with feature information of an infrastructure environment bound to a locally stored license file; in the case where the feature information of the infrastructure environment where the VNF instance is running is consistent with the feature information of the infrastructure environment bound to the license file, it indicates that the VNF instance is currently running in a legitimately authorized environment, and the VNF provides corresponding service functions according to each authorized items in the license file; in the case where the feature information of the infrastructure environment where the VNF instance is running is inconsistent with the feature information of the infrastructure environment bound to the configured license file, the VNF determines that the VNF instance is currently running in an environment that is not legitimately authorized (that is, the deployment of the VNF instance is unauthorized) and initiates protection measures such as restricting software capabilities.

According to specifications of the ETSI, for the same network function, a virtual network element (VNF) and a non-virtual network element (PNF) should have no difference in external service performance and software logic architecture. In the preceding two embodiments, a license authentication method compatible with the PNF is provided for the VNF in conjunction with a specification framework of the ETSI.

FIG. 6 is a structural diagram of an authentication apparatus according to an embodiment. Referring to FIG. 6, the apparatus provided by this embodiment includes an acquisition module 601 and an authentication module 602. The acquisition module 601 is configured to acquire feature information of an infrastructure environment where a VNF instance is running. The authentication module 602 is configured to determine, according to the feature information of the infrastructure environment where the VNF instance is running and a configured license file, whether the VNF instance is currently running in a legitimately authorized environment.

In an embodiment, the feature information of the infrastructure environment where the VNF instance is running includes a unique physical identifier or logical identifier of the infrastructure resource associated with the VNF instance among unique physical identifiers or logical identifiers of infrastructure resources managed by MANO, where the unique physical identifier or logical identifier is feature information used for distinguishing the infrastructure environment where the VNF instance is deployed.

In an embodiment, the unique physical identifier or logical identifier of the infrastructure resource associated with the VNF instance among the unique physical identifiers or logical identifiers of the infrastructure resources managed by the MANO includes, but is not limited to, a service domain name, a hostname or a VIM ID provided by the VIM to a VNFM or an NFVO, where the VIM ID is customized by an infrastructure service provider; an asset identifier or asset identifier combination of a physical device in an NFVI resource pool managed by the VIM, such as a CPU identifier, a hardware feature code or a device barcode of a server; a combination of geographic location information of the NFVI resource pool managed by the VIM and network service endpoint information, such as an NfviPopGeneral information element defined in NFV-IFA005 V0.8.10 for Or-Vi interface specifications.

In an embodiment, the authentication module 602 is configured to: in a case where the feature information of the infrastructure environment where the VNF instance is running is consistent with feature information of an infrastructure environment bound to the license file, determine that the VNF instance is currently running in the legitimately authorized environment; and in a case where the feature information of the infrastructure environment where the VNF instance is running is inconsistent with the feature information of the infrastructure environment bound to the configured license file, determine that the VNF instance is currently running in an environment that is not legitimately authorized.

In an embodiment, the authentication module 602 is further configured to: in response to determining that the VNF instance is currently running in the legitimately authorized environment, provide corresponding service functions according to each authorized item in the license file; and in response to determining that the VNF instance is currently running in the environment that is not legitimately authorized, initiate protection measures such as restricting software capabilities.

In this embodiment, whether the VNF instance is currently running in the legitimately authorized environment is determined in conjunction with the feature information of the infrastructure environment where the VNF instance is running and the license file. The feature information of the infrastructure environment where the VNF instance is running reflects features of a physical device and truly reflects characteristics of the infrastructure environment where the VNF instance is running, thereby providing effective license authentication for a VNF and protecting interests of a telecommunications equipment provider.

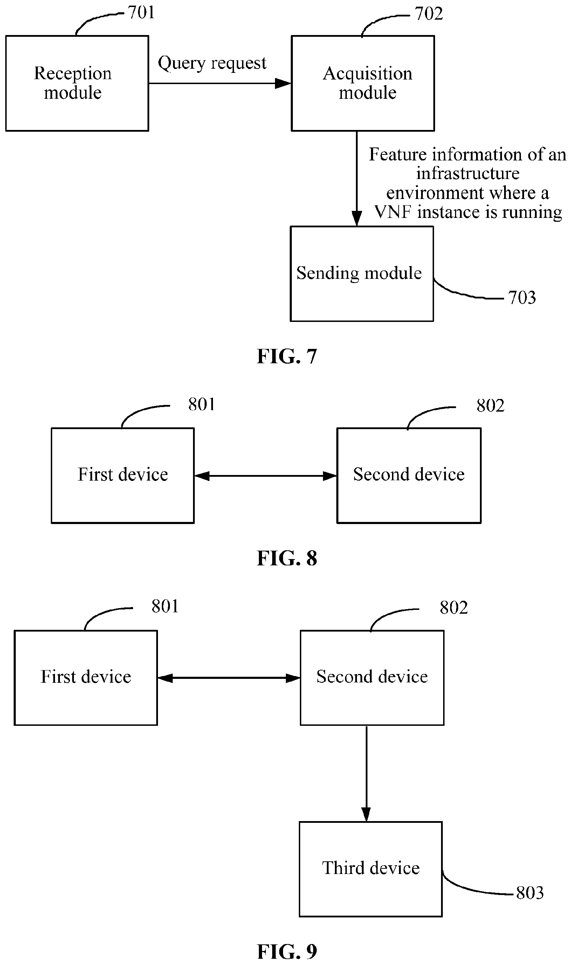

FIG. 7 is a structural diagram of another authentication apparatus according to an embodiment. As shown in FIG. 7, the apparatus provided by this embodiment includes a reception module 701, an acquisition module 702 and a sending module 703. The reception module 701 is configured to receive a query request, where the query request carries a VNF instance identifier. The acquisition module 702 is configured to acquire, according to the VNF instance identifier, feature information of an infrastructure environment where a VNF instance is running. The sending module 703 is configured to send a query acknowledgement, where the query acknowledgement includes the feature information of the infrastructure environment where the VNF instance is running.

In an embodiment, the acquisition module 702 is configured to search a preset correspondence between VNF instance identifiers and information about infrastructure resources allocated to VNFs in an instantiation process for information about the infrastructure resource allocated to a VNF in the instantiation process, where the information about the infrastructure resource corresponds to the VNF instance identifier in the query request, and use the information about the infrastructure resource as the feature information of the infrastructure environment where the VNF instance is running.

Another embodiment of the present disclosure provides an authentication device including a processor and a computer-readable storage medium. The computer-readable storage medium stores instructions, and the instructions are configured to, when executed by the processor, implement any one of the authentication methods described above.

Another embodiment of the present disclosure provides a computer-readable storage medium. The computer-readable storage medium stores a computer program, and the computer program is configured to, when executed by a processor, implement any one of the authentication methods described above.

FIG. 8 is a structural diagram of an authentication system according to an embodiment. Referring to FIG. 8, the authentication system provided by this embodiment includes a first device 801 and a second device 802. The first device 801 is configured to: send a query request, where the query request carries a VNF instance identifier; receive a query acknowledgement, where the query acknowledgement includes feature information of an infrastructure environment where a VNF instance is running; and determine, according to the feature information of the infrastructure environment where the VNF instance is running and a configured license file, whether the VNF instance is currently running in a legitimately authorized environment. The second device 802 is configured to: receive the query request, where the query request carries the VNF instance identifier; acquire, according to the VNF instance identifier, the feature information of the infrastructure environment where the VNF instance is running; and send the query acknowledgement, where the query acknowledgement includes the feature information of the infrastructure environment where the VNF instance is running.

In an embodiment, the feature information of the infrastructure environment where the VNF instance is running includes a unique physical or logical identifier of the infrastructure resource associated with the VNF instance among unique physical identifiers or logical identifiers of infrastructure resources managed by a MANO, where the unique physical or logical identifier is feature information used for distinguishing the infrastructure environment where the VNF instance is deployed.

In an embodiment, the unique physical identifier or logical identifier of the infrastructure resource associated with the VNF instance among the unique physical identifiers or logical identifiers of the infrastructure resources managed by the MANO includes, but is not limited to, a service domain name, a hostname or a VIM ID provided by the VIM to a VNFM or an NFVO, where the VIM ID is customized by an infrastructure service provider; an asset identifier or asset identifier combination of a physical device in an NFVI resource pool managed by the VIM, such as a CPU identifier, a hardware feature code or a device barcode of a server; a combination of geographic location information of the NFVI resource pool managed by the VIM and network service endpoint information, such as an NfviPopGeneral information element defined in NFV-IFA005 V0.8.10 for Or-Vi interface specifications.

In an embodiment, the first device 801 is configured to determine, according to the feature information of the infrastructure environment where the VNF instance is running and the configured license file, whether the VNF instance is currently running in the legitimately authorized environment in at least one of the following manners: in a case where the feature information of the infrastructure environment where the VNF instance is running is consistent with feature information of an infrastructure environment bound to the license file, it is determined that the VNF instance is currently running in the legitimately authorized environment; or in a case where the feature information of the infrastructure environment where the VNF instance is running is inconsistent with the feature information of the infrastructure environment bound to the configured license file, it is determined that the VNF instance is currently running in an environment that is not legitimately authorized.

In an embodiment, the first device 801 is further configured to: in response to determining that the VNF instance is currently running in the legitimately authorized environment, provide corresponding service functions according to each authorized item in the license file; and in response to determining that the VNF instance is currently running in the environment that is not legitimately authorized, initiate protection measures such as restricting software capabilities.

In an embodiment, the second device 802 is configured to acquire, according to the VNF instance identifier, the feature information of the infrastructure environment where the VNF instance is running in the following manner: searching a preset correspondence between VNF instance identifiers and information about infrastructure resources allocated to VNFs in an instantiation process for information about the infrastructure resource allocated to a VNF in the instantiation process, where information about the infrastructure resource corresponds to the VNF instance identifier in the query request, and using the information about the infrastructure resource as the feature information of the infrastructure environment where the VNF instance is running.

In this embodiment, whether the VNF instance is currently running in the legitimately authorized environment is determined in conjunction with the feature information of the infrastructure environment where the VNF instance is running and the license file. The feature information of the infrastructure environment where the VNF instance is running reflects features of a physical device and truly reflects characteristics of the infrastructure environment where the VNF instance is running, thereby providing effective license authentication for a VNF and protecting legitimate interests of a telecommunications equipment provider.

FIG. 9 is a structural diagram of another authentication system according to an embodiment. Referring to FIG. 9, the authentication system provided by this embodiment includes a first device 801, a second device 802 and a third device 803. The first device 801 is configured to: send a query request, where the query request carries a VNF instance identifier; receive a query acknowledgement, where the query acknowledgement includes feature information of an infrastructure environment where a VNF instance is running; and determine, according to the feature information of the infrastructure environment where the VNF instance is running and a configured license file, whether the VNF instance is currently running in a legitimately authorized environment. The second device 802 is configured to forward the query request and forward the query acknowledgement. The third device 803 is configured to: receive the query request, where the query request carries the VNF instance identifier; acquire, according to the VNF instance identifier, the feature information of the infrastructure environment where the VNF instance is running; and send the query acknowledgement, where the query acknowledgement includes the feature information of the infrastructure environment where the VNF instance is running.

In this embodiment, the feature information of the infrastructure environment where the VNF instance is running includes a unique physical identifier or logical identifier of the infrastructure resource associated with the VNF instance among unique physical identifiers or logical identifiers of infrastructure resources managed by a MANO, where the unique physical identifier or logical identifier is feature information used for distinguishing the infrastructure environment where the VNF instance is deployed.

In an embodiment, the unique physical identifier or logical identifier of the infrastructure resource associated with the VNF instance among the unique physical identifiers or logical identifiers of the infrastructure resources managed by the MANO includes, but is not limited to, a service domain name, a hostname or a VIM ID provided by the VIM to a VNFM or an NFVO, where the VIM ID is customized by an infrastructure service provider; an asset identifier or asset identifier combination of a physical device in an NFVI resource pool managed by the VIM, such as a CPU identifier, a hardware feature code or a device barcode of a server; a combination of geographic location information of the NFVI resource pool managed by the VIM and network service endpoint information, such as an NfviPopGeneral information element defined in NFV-IFA005 V0.8.10 for Or-Vi interface specifications.

In this embodiment, the first device 801 is configured to determine, according to the feature information of the infrastructure environment where the VNF instance is running and the configured license file, whether the VNF instance is currently running in the legitimately authorized environment in at least one of the following manners: in a case where the feature information of the infrastructure environment where the VNF instance is running is consistent with feature information of an infrastructure environment bound to the license file, it is determined that the VNF instance is currently running in the legitimately authorized environment; or in a case where the feature information of the infrastructure environment where the VNF instance is running is inconsistent with the feature information of the infrastructure environment bound to the configured license file, it is determined that the VNF instance is currently running in an environment that is not legitimately authorized.

In an embodiment, the first device 801 is further configured to: in response to determining that the VNF instance is currently running in the legitimately authorized environment, provide corresponding service functions according to each authorized item in the license file; and in response to determining that the VNF instance is currently running in the environment that is not legitimately authorized, initiate protection measures such as restricting software capabilities.

In an embodiment, the third device 803 is configured to acquire, according to the VNF instance identifier, the feature information of the infrastructure environment where the VNF instance is running in the following manner: searching a preset correspondence between VNF instance identifiers and information about infrastructure resources allocated to VNFs in an instantiation process for information about the infrastructure resource allocated to a VNF in the instantiation process, where information about the infrastructure resource corresponds to the VNF instance identifier in the query request, and using the information about the infrastructure resource as the feature information of the infrastructure environment where the VNF instance is running.

In this embodiment, authentication is performed in conjunction with the feature information of the infrastructure environment where the VNF instance is running and information about an environment bound to the license file, and whether the VNF instance is currently running in the legitimately authorized environment is determined. Since a license is bound to information about an infrastructure environment and is difficult to be faked or simulated, an effective license authentication means can be provided for a VNF, thereby protecting interests of a telecommunications equipment provider.

In an embodiment, the first device may be the VNF, the second device may be the VNFM, and the third device may be the NFVO.

The first device, the second device and the third device in this embodiment may also be disposed in the same device.

It is to be understood by those having ordinary skill in the art that function modules/units in all or part of the steps of the preceding method or the preceding system or apparatus may be implemented as software, firmware, hardware and suitable combinations thereof. In the hardware implementation, the division of the function modules/units in the preceding description may not correspond to the division of physical components. For example, one physical component may have multiple functions, or one function or step may be performed jointly by multiple physical components. Some or all components may be implemented as software executed by a processor such as a digital signal processor or a microprocessor, may be implemented as hardware, or may be implemented as integrated circuits such as application-specific integrated circuits. Such software may be distributed over computer-readable media. The computer-readable media may include computer storage media (or non-transitory media) and communication media (or transitory media). As is known to those having ordinary skill in the art, the term computer storage media include volatile and non-volatile as well as removable and non-removable media implemented in any method or technology for storing information (such as computer-readable instructions, data structures, program modules or other data). The computer storage media include, but are not limited to, a random access memory (RAM), read-only memory (ROM), electrically erasable programmable read only memory (EEPROM), a flash memory or other memory technologies; a compact disc read-only memory (CD-ROM), digital video disc (DVD) or other optical disk memories; magnetic cassettes, magnetic tapes, magnetic disk memories or other magnetic storage devices, or any other medium that can be used for storing desired information and that can be accessed by a computer. Moreover, as is known to those having ordinary skill in the art, communication media generally include computer-readable instructions, data structures, program modules or other data in carriers or in modulated data signals transported in other transport mechanisms and may include any information delivery medium.

## Claims

1. An authentication method, comprising:
acquiring feature information of an infrastructure environment where a virtualization network function, VNF, instance is running; and
determining, according to the feature information of the infrastructure environment where the VNF instance is running and a configured license file, whether the VNF instance is currently running in a legitimately authorized environment.

2. The authentication method of claim 1, wherein acquiring the feature information of the infrastructure environment where the VNF instance is running comprises:
sending a query request, wherein the query request carries a VNF instance identifier; and
receiving a query acknowledgment, wherein the query acknowledgment comprises the feature information of the infrastructure environment where the VNF instance is running.

3. The authentication method of claim 1 or 2, wherein determining, according to the feature information of the infrastructure environment where the VNF instance is running and the configured license file, whether the VNF instance is currently running in the legitimately authorized environment comprises:
in a case where the feature information of the infrastructure environment where the VNF instance is running is consistent with feature information of an infrastructure environment bound to the configured license file, determining that the VNF instance is currently running in the legitimately authorized environment.

4. The authentication method of claim 1 or 2, wherein determining, according to the feature information of the infrastructure environment where the VNF instance is running and the configured license file, whether the VNF instance is currently running in the legitimately authorized environment comprises:
in a case where the feature information of the infrastructure environment where the VNF instance is running is inconsistent with feature information of an infrastructure environment bound to the configured license file, determining that the VNF instance is currently running in an environment that is not legitimately authorized.

5. The authentication method of any one of claims 1 to 4, wherein the feature information of the infrastructure environment where the VNF instance is running comprises a unique physical identifier or logical identifier of an infrastructure resource associated with the VNF instance among unique physical identifiers or logical identifiers of infrastructure resources managed by a network function virtualization management and orchestration, NFV MANO.

6. The authentication method of claim 5, wherein the unique physical identifier or logical identifier of the infrastructure resource associated with the VNF instance among the unique physical identifiers or logical identifiers of the infrastructure resources managed by the MANO comprises:
a service domain name, a hostname or a virtualization infrastructure manager, VIM, identifier, ID, provided by a VIM to a virtualization network function manager, VNFM, or a network function virtualization orchestrator, NFVO, wherein the VIM ID is customized by an infrastructure service provider;
an asset identifier or asset identifier combination of a physical device in a network function virtualization infrastructure, NFVI, resource pool managed by the VIM;
a combination of geographic location information of the NFVI resource pool managed by the VIM and network service endpoint information.

7. An authentication method, comprising:
receiving a query request, wherein the query request carries a virtualization network function, VNF, instance identifier;
acquiring, according to the VNF instance identifier, feature information of an infrastructure environment where a VNF instance is running; and
sending a query acknowledgement, wherein the query acknowledgement comprises the feature information of the infrastructure environment where the VNF instance is running.

8. The authentication method of claim 7, wherein acquiring, according to the VNF instance identifier, the feature information of the infrastructure environment where the VNF instance is running comprises:
searching a preset correspondence between VNF instance identifiers and information about infrastructure resources allocated to VNFs in an instantiation process for information about an infrastructure resource allocated to a VNF in the instantiation process, where the information about the infrastructure resource corresponds to the VNF instance identifier in the query request; and using the information about the infrastructure resource as the feature information of the infrastructure environment where the VNF instance is running.

9. An authentication apparatus, comprising:
an acquisition module, which is configured to acquire feature information of an infrastructure environment where a virtualization network function, VNF, instance is running; and
an authentication module, which is configured to determine, according to the feature information of the infrastructure environment where the VNF instance is running and a configured license file, whether the VNF instance is currently running in a legitimately authorized environment.

10. An authentication apparatus, comprising:
a reception module, which is configured to receive a query request, wherein the query request carries a virtualization network function, VNF, instance identifier;
an acquisition module, which is configured to acquire, according to the VNF instance identifier, feature information of an infrastructure environment where a VNF instance is running; and
a sending module, which is configured to send a query acknowledgement, wherein the query acknowledgement comprises the feature information of the infrastructure environment where the VNF instance is running.

11. An authentication device, comprising a processor and a computer-readable storage medium, wherein the computer-readable storage medium stores instructions, and the instructions are configured to, when executed by the processor, implement the authentication method of any one of claims 1 to 8.

12. A computer-readable storage medium, which is configured to store a computer program, wherein the computer program is configured to, when executed by a processor, implement the authentication method of any one of claims 1 to 8.

13. An authentication system, comprising:
a first device, which is configured to: send a query request, wherein the query request carries a virtualization network function, VNF, instance identifier; receive a query acknowledgement, wherein the query acknowledgement comprises feature information of an infrastructure environment where a VNF instance is running; and determine, according to the feature information of the infrastructure environment where the VNF instance is running and a configured license file, whether the VNF instance is currently running in a legitimately authorized environment; and
a second device, which is configured to: receive the query request; acquire, according to the VNF instance identifier, the feature information of the infrastructure environment where the VNF instance is running; and send the query acknowledgement.

14. An authentication system, comprising:
a first device, which is configured to: send a query request, wherein the query request carries a virtualization network function, VNF, instance identifier; receive a query acknowledgement, wherein the query acknowledgement comprises feature information of an infrastructure environment where a VNF instance is running; and determine, according to the feature information of the infrastructure environment where the VNF instance is running and a configured license file, whether the VNF instance is currently running in a legitimately authorized environment;
a second device, which is configured to forward the query request and forward the query acknowledgement; and
a third device, which is configured to: receive the query request; acquire, according to the VNF instance identifier, the feature information of the infrastructure environment where the VNF instance is running; and send the query acknowledgement.
